Europäisches Patentamt

(19) European Patent Office

Office européen des brevets

(11) Publication number: **0 006 687**
A1

(12) **EUROPEAN PATENT APPLICATION**

(21) Application number: 79300921.8

(22) Date of filing: 23.05.79

(51) Int. Cl.³: **F 02 M 25/12,** F 02 M 27/02, C 01 B 3/10

(30) Priority: 26.05.78 GB 2313278

(71) Applicant: **Leong, Chai Mun, 192 East Coast Road, Singapore 15 (SG)**

(43) Date of publication of application: **09.01.80 Bulletin 80/1**

(72) Inventor: **Leong, Chai Mun, 192 East Coast Road, Singapore 15 (SG)**

(74) Representative: **Farwell, William Robert et al, PHILLIPS & LEIGH 7 Staple Inn Holborn, London WC1V 7QF (GB)**

(84) Designated Contracting States: **BE DE FR IT SE**

(54) **Method of improving the combustion of internal-combustion engines and engine for implementing this method.**

(57) A method of improving fuel utilisation and reducing noxious exhaust emissions in an internal combustion engine having a carburettor (22') for feeding a fuel/air mixture to a mixture inlet tract (23'), said method comprising admitting to the inlet tract, to be carried to the combustion chamber(s) of the engine after mixing with the fuel air mixture, a flow of hydrogen (8) and a catalyst (9', 14') for the combustion, the catalyst being a catalytic metal as such or as compound in particulate form or as a solution.

- 1 -

## I.C. ENGINE IMPROVEMENTS

The invention relates to improvements in, and in the operation of, internal combustion engines running on hydrocarbon fuels.

The object of the invention is to provide a means to reduce the noxious products of combustion in the exhaust gas and to increase the overall efficiency of the engine by improving combustion, thus reducing fuel consumption.

It is known that, in present day motor car engines and other internal combustion engines, a good part of the fuel fed into the induction passages and combustion chamber is not fully burned. This is due partly to inefficient atomisation and vaporisation of the fuel before it enters the combustion chamber and partly to the mixture of air/fuel not being constant under different running conditions. On account of the heavy nature of the fuels and other limitations, complete vaporisation of the fuel is not achieved in present day carburettors.

The invention provides a method of improving fuel utilisation, and reducing noxious exhaust emissions, in an internal combustion engine having a carburettor for feeding a fuel/air mixture to a mixture inlet tract, said method comprising admitting to the inlet tract, to be carried to the engine after mixing with the fuel/air mixture, a flow of hydrogen and a catalyst for the combustion, the catalyst being a catalytic metal as such or as a compound in particulate form or as a solution.

Provision may also be made for admitting and directing at least one stream of a heated gas (air, recirculated exhaust gas or a mixture thereof) to the mixture inlet tract to impinge upon and mix turbulently with the flow of fuel/air mixture to vaporize fuel droplets therein, and in any event the hydrogen and catalyst or the catalyst alone may be carried in a stream of a carrier gas, heated or not.

The invention provides further an internal combustion engine having a carburettor for feeding fuel/air mixture to a mixture inlet, in which engine the mixture inlet has means for feeding said hydrogen and catalyst and, where used, carrier gas and/or extra, heated gas streams to the mixture inlet and thence into the combustion chamber or chambers of the engine.

Use of catalysts in solution, with extra, heated air or other gas streams is the subject of my earlier U.K. patent No. 1 431 893 to which reference may be made for further discussion.

The hydrogen may be fed from a separate source, but is conveniently generated in situ by reaction of steam with a suitable metal, in particular iron as filings or in other suitable, divided form.

Conveniently the hydrogen is generated in and the catalyst fed from a single unit from which the hydrogen and catalyst pass together via a passageway to the mixture inlet together with any flow of carrier gas.  A solid or other catalyst may for example be entrained in a flow of gas to such a passageway, which may conveniently be provided in a carburettor to inlet manifold gasket, without need for any other special parts in the engine.

Specific catalysts are the following, in the form of the elements or as compounds as convenient (clearly for example sodium or potassium is used as a compound):

| | | |
|---|---|---|
| Nickel | Zinc | Potassium |
| Manganese | Cobalt | Aluminium |
| Iron | Antimony | Sodium |
| Copper | Tin | Boron |
| Chromium | | |

Copper in particular is good, for example as copper oxide CuO, admitted as such or as a compound converted in the combustion chambers.  Such conversion is referred to in my earlier patent already cited, using a solution of a copper compound as the catalyst.

A heat exchanger may be provided to heat extra air by means of heat in the exhaust gases.  For example the heat exchanger may be an air inlet tube passing through the interior of the exhaust system or alternatively or in addition wrapped round a pipe through which the exhaust gases pass.  Alternatively or in addition, heating elements particularly electrical heating elements may be used, whether for heating gases or for generating steam.

Suitably inlets for a gas to act as a carrier gas for catalyst or to form gas streams as described above are provided with a non-return valve set to admit the gas at a predetermined inlet depression below atmospheric pressure.

Thus, heated air or exhaust gas or mixture, with a combustion catalyst and hydrogen, can be introduced into the induction passages of the engine. This gives rise to physical and chemical actions producing certain desired effects discussed further below. Extra streams, for example, drawn in by the depression present in the inlet manifold, may be one or more in number, and clash with considerable force, on entering the induction passages, with the air/fuel mixture coming from the carburettor. The resulting turbulence causes breaking up of the fuel into finer droplets thus improving on the process of atomisation set up originally by the carburettor. Heat, acquired for example by passage of the air through tubing passing through the exhaust manifold, accelerates the vapourisation process so that, by the time the fuel enters the combustion chanber, it is in such a vaporised state that it is easily ignited and burns more fully. The introduction of air can ensure that sufficient oxygen is present at all times for efficient combustion to take place.

Thus, with better atomisation, vaporisation, sufficient oxygen and the chemical action provided, the result is improved combustion and lowering or elimination of the noxious products of combustion besides improvement in petrol consumption.

Embodiments of the invention are described by way of example only with reference to the accompanying drawings in which:-

Fig. 1 is a side view of a device for attachment to an engine to carry the invention into effect;

Fig. 2 is a top view of the device;

Fig. 3 is a view of the device from below;

Fig. 4 is a view of the inlet and exhaust manifold
(Trade Name)
of a Morris /1100 car modified to take the device of the preceding figures;

Fig. 5 is a view of a modified carburettor to manifold gasket for feeding catalyst particles;

Fig. 6 is a schematic partially sectional view of the device installed in an engine.

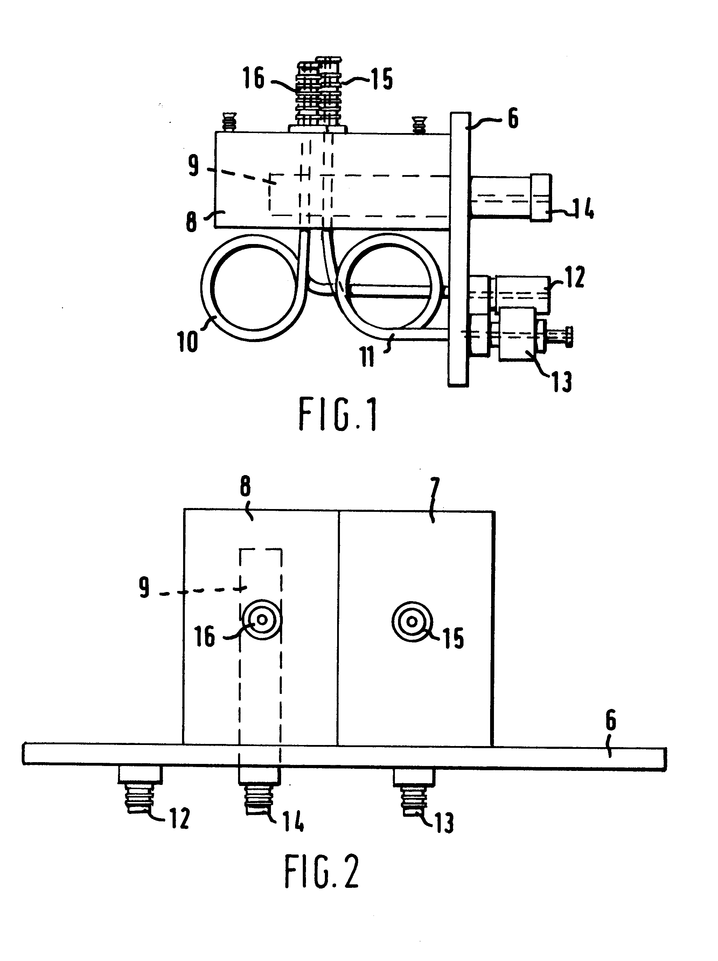

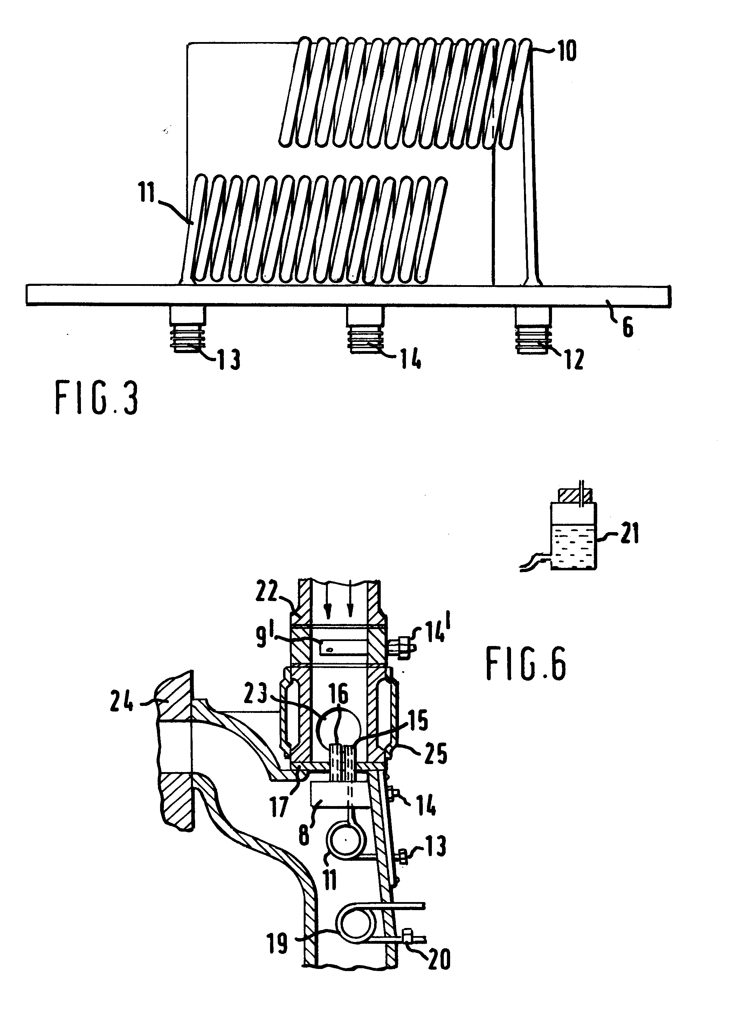

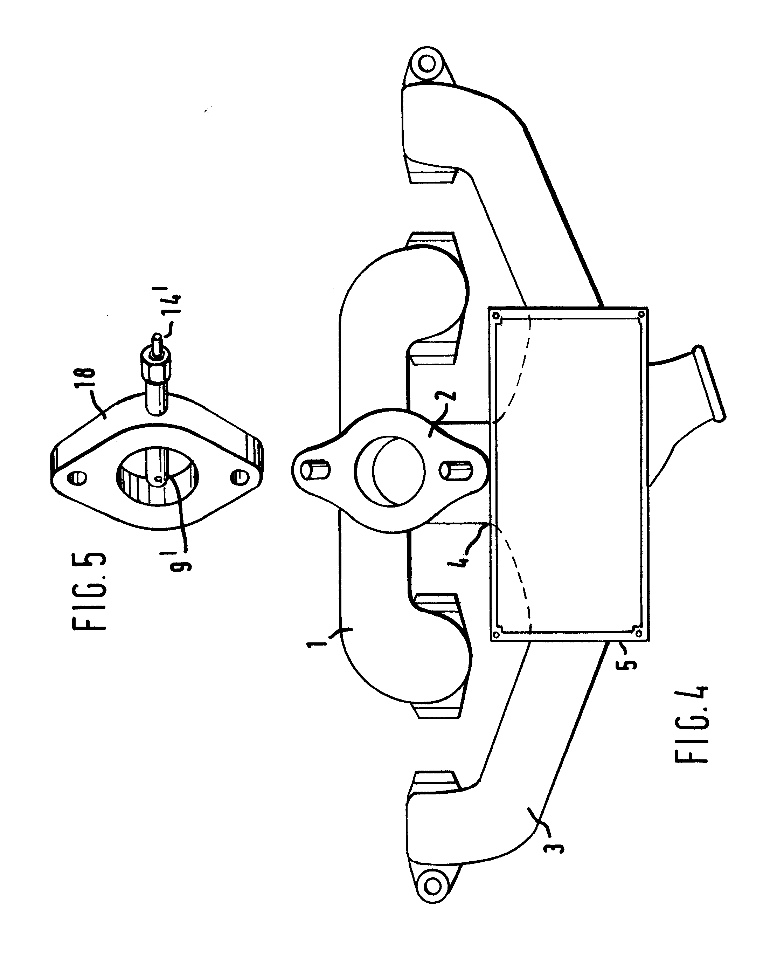

In the drawings (Fig. 4) there is shown a view of the manifolds of a Morris 1100 car engine modified to take the above device.   The inlet manifold 1 carries the carburettor seating 2 and is joined to the exhaust manifold 3 at a hot spot 4.   A mounting box 5 is secured to the exhaust manifold.   This mounting box carries the device by means of a mounting plate seen for example in Fig. 1 referenced 6.   This mounting plate carries two small closed chambers, chamber 7 for heated air alone and chamber 8 for a tube 9 carrying particulate catalyst for example copper oxide and exposed to a

- 6 -

second stream of heated air.    The heating of the air
is effected by coils of copper tubing 10 and 11, well
seen in Figs. 1 and 3.    Air enters these tubes through
metering jets 12 (tube 10) and 13 (tube 11).    It also
enters the catalyst tube through a metering jet 14.

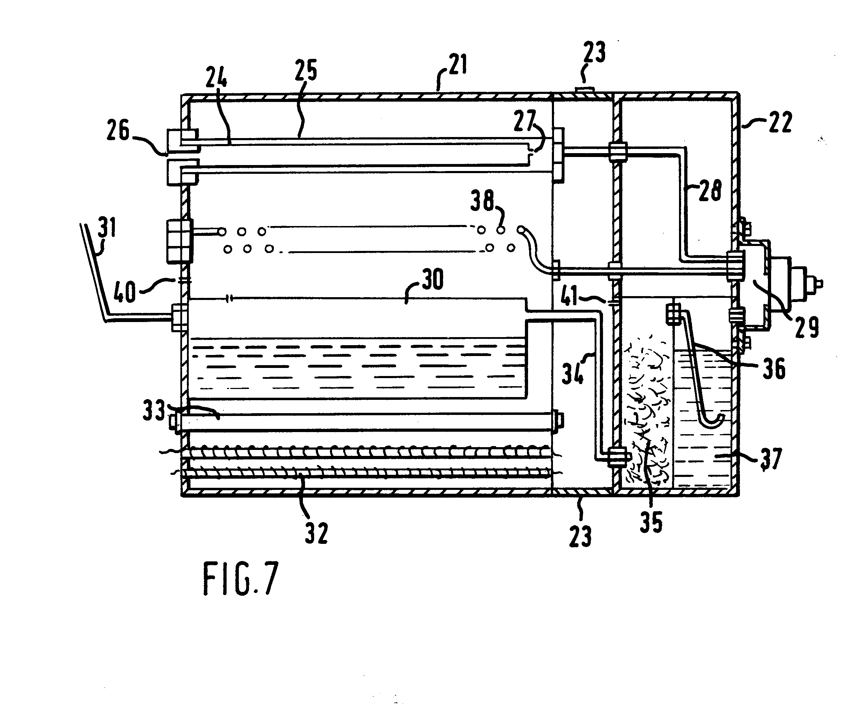

The disposition of the device is best seen in
Fig. 6 which shows only a single coil, corresponding
to coil 11 of the device of Fig. 1, but shows well the
position within the path of the exhaust gases in the
manifold.    The Fig. shows also how the outlet nozzles,
which are the 'inlet passages' of the general statement
of invention earlier in this specification, pass through
a plate 17 where the manifolds join at the hot spot 4,
the nozzle from chamber 7 being referenced 15 and that
from chamber 8 being referenced 16.

Sundry variations of the construction, some shown
in the drawings and others not, are of course possible.
For example in Fig. 1 heated air additional to that
drawn from the outside through the tube of catalyst
particles is fed to the chamber in which the tube is
mounted whereas this construction is not shown in Fig. 6.
The supply of catalyst from a tube mounted on the device
itself is indeed optional and may be superseded, or as
shown in Fig. 6 supplemented, by a tube such as 9' with
a metering jet 14' (Fig. 5) mounted in a modified
carburettor to manifold gasket 18.    Further, an optional
connection to a container for liquid or vaporous catalysts
may be made to any of the metering jets 12, 13, 14 and 14'
to supplement the solid catalyst, for example with catalysts
such as those disclosed in my U.K. Patent No. 1,431,893

0006687

- 7 -

(U.S. Patent No. 3929118, Japanese laid open application No. 18986/73, Belgian Patent No. 800,841, French Application No. 73-21499, Canadian Patent Application No. 206877). A further optional feature with a coil 19 and metering jet 20 for supplying heated air to the reservoir 21' for such liquid or vaporous catalysts is also shown in Fig. 6.

It can be seen from the drawings how in the various constructions, air charged with fuel passes from the carburettor the base of which is shown at 22' in Fig. 6, impinges upon extra air drawn in as streams from the jets 15 and 16 and mixes turbulently with them spreading the catalyst particles throughout the charge as it passes to the engine through the inlet passages, the entrance to one of which is shown at 23' in Fig. 6.

Fig. 6 also shows a small portion of the cylinder block of the engine at 24' and an optional water jacket 25' which is fed with hot water from the engine for use in severe climates to assist vaporisation.

Alternatively, in hot climates, the water jacket may be fed with water from the cool part of the circulatory system of the engine and serve to prevent volumetric expansion due to excessive heat from the engine interfering with the atomisation of fuel droplets.

The metering jets can be provided with a solenoid valve or other control device and are cylinders made of copper or steel with a centre passage and ball valve and spring to ensure that there is air taken in only under inlet depression. Air is sucked in by manifold depression through the jets the diameter of which in the particular example is 0.3 mm but can vary for example from 0.1 to 0.5 mm or 1 mm. The use of an air feed to the chamber containing the catalyst tube is preferred so that a gentle flow of air through the tube itself carrying the required very small amount of particles is then fed into the engine by a larger flow of heated air passing through the chamber and entraining the air emerging from a tube which is perforated or otherwise formed to allow the air to pass. An alternative construction is simply to have a perforated tube containing a catalyst in the chamber without air being drawn into the interior of the tube, sufficient catalyst being entrained by air, from a coil of copper tube such as 10, passing partly into the tube and carrying particles out of it.

The very small amounts of catalysts required in any case mean that a tube lasts many weeks but it is made to be readily screwed out of the plate 6 for replacement or refilling as convenient. It is envisaged that disposable catalyst tubes may be made available.

With respect to the carburettors of the engine, a slight adjustment or modification may be necessary, because of the improvement in the combustion process and the requirement for less fuel. To do this in the case of SU (Trade Mark) carburettors, the size of the needle is altered to limit or cut down the fuel coming through the jet opening. Alternatively, the jet opening can be modified to give the same result. In the case of other down-draft carburettors, e.g. Solex, Zenith Stromberg, Weber (all Trademarks), all that is required is to have a smaller jet opening.

All the above drawings relate specifically to the introduction of the catalyst. The supply of the hydrogen which is from a cylinder in these instances though it could alternatively be from a steam fed generator as in Fig. 7 below, is made as convenient, specifically for example a tapping and inlet (not shown) to the chamber 8 (Figs. 1 etc.) so that it passes in with the catalyst.

- 10 -

In Fig. 7 of the accompanying drawings is shown a unitary attachment for an engine designed to supply a stream of air containing entrained catalyst particles together with hydrogen gas to a special carburettor to manifold gasket and thus to the inlet tract of the engine, without other modification of the engine.

The unit consists of two connected chambers 21 and 22 joined by bars 23 of which two are shown.  Chamber 21 contains a replaceable catalyst-containing tube 24 held within an outer tube 25.  This catalyst tube receives air through an opening 26 and the resulting air flow, drawn in by the suction of the engine, passes from the tube through an outlet 27 and tube 28 to a mixing chamber 29 attached to chamber 22.

Also provided in the chamber 21 is a water container 30 fed as required by an inlet tube 31.  This container is heated by electric elements 32 but may alternatively or in addition be heated by exhaust gas.  Such gas may be passed through a simple straight through tube, such as tube 33 shown, but may alternatively be passed through a tube wrapped around the water container.  Whichever means of heating is used, steam passes from the water container through a tube to chamber 22, where it passes through a bed 35 of iron filings or the like in which hydrogen is generated.  The hydrogen then passes through a tube 36 to a water trap 37 and thence to the mixing chamber 29.

In chamber 21 is shown an optional coiled tube 38 through which air may pass from an inlet 39 through the tube itself and thence to chamber 22 and the mixing chamber 29 after being heated in the chamber 21.

Vents 40 and 41 are provided in the chambers 21 and 22 respectively to ensure that no build-up of gas pressure within them can occur.

The unit as shown therefore passes a mixture of steam, hydrogen, and catalyst particles entrained in an air flow, together with extra heated air if required to the engine and gives the benefits discussed earlier in relation to the other embodiments.

0006687

- 1 -

I CLAIM

1.   A method of improving fuel utilisation and reducing noxious exhaust emissions in an internal combustion engine having a carburettor for feeding a fuel/air mixture to a mixture inlet tract, said method comprising admitting to the inlet tract, to be carried to the combustion chamber(s) of the engine after mixing with the fuel air mixture, a flow of hydrogen and a catalyst for the combustion, the catalyst being a catalytic metal as such or as a compound in particulate form or as a solution.

2.   A method according to claim 1, wherein, further, at least one stream of a heated gas (air, recirculated exhaust gas or a mixture thereof) is admitted and directed into the inlet tract to impinge upon and mix turbulently with the flow of fuel/air mixture to vaporise fuel droplets therein.

3.   A method according to claim 1, wherein the hydrogen and catalyst, or the catalyst alone, is carried to the inlet tract in a stream of carrier gas, heated or not.

4.   A method according to any preceding claim, in which the hydrogen is generated in situ by reaction of steam with iron or other metal in divided form.

5.   A method according to claim 2, 3 or 4 wherein heat exchange with exhaust gases from the engine is used to heat stream(s) of gas as specified in claim 2 or a carrier gas as specified in claim 3 or both.

6. A method according to any preceding claim, wherein the catalyst is selected from the following, in the form of the elements or as compounds as convenient:

| | | |
|---|---|---|
| Nickel | Zinc | Potassium |
| Manganese | Cobalt | Aluminium |
| Iron | Antimony | Sodium |
| Copper | Tin | Boron |
| Chromium | | |

7. A method according to any preceding claim, wherein the catalyst is copper oxide (CuO) admitted as such or as a compound converted thereto in the combustion chamber(s) of the engine.

8. A method according to claim 1, substantially as herein described in relation to any of the accompanying drawings.

9. An internal combustion engine constructed to be operated according to any preceding claim.

10. An engine according to claim 9, and for operation according to claim 4, having a catalyst-feeding means and hydrogen generator as a single unit attached to the engine.

11. An engine according to claim 9 or 10, wherein the hydrogen and catalyst are fed to the inlet tract through a passage in a gasket between the carburettor and inlet tract.

## ABSTRACT

## I.C. ENGINE IMPROVEMENTS

A method of improving fuel utilisation and reducing noxious exhaust emissions in an internal combustion engine having a carburettor for feeding a fuel/air mixture to a mixture inlet tract, said method comprising admitting to the inlet tract, to be carried to the combustion chamber(s) of the engine after mixing with the fuel air mixture, a flow of hydrogen and a catalyst for the combustion, the catalyst being a catalytic metal as such or as a compound in particulate form or as a solution.

0006687

FIG.1

FIG.2

0006687

FIG.3

FIG.6

FIG.5

FIG.4

FIG.7

European Patent
Office

EUROPEAN SEARCH REPORT

0006687
Application number

EP 79 300 921.8

## DOCUMENTS CONSIDERED TO BE RELEVANT

| Category | Citation of document with indication, where appropriate, of relevant passages | Relevant to claim |
|---|---|---|
| X | US – A – 3 653 364 (BOGAN) <br> * column 1, lines 5 to 64; abstract * | 1,4 |
| D | GB – A – 1 431 893 (LEONG) <br> * page 1, lines 13 to 18, 32 to 43, 49 to 66, 67 to 74; page 2, lines 33 to 44; claims 1, 10 and 11 * | 1-3, 5-7 |
| A | US – A – 3 906 913 (RUPE) <br> * whole document * | |

**CLASSIFICATION OF THE APPLICATION (Int. Cl.3)**

F 02 M 25/12

F 02 M 27/02

C 01 B 3/10

**TECHNICAL FIELDS SEARCHED (Int.Cl.²)**

B 01 J 21/00

F 02 M 25/00

F 02 M 27/02

F 01 N 3/15

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| | The present search report has been drawn up for all claims | | |
| Place of search | Berlin | Date of completion of the search 20-08-1979 | Examiner STÖCKLE |

EPO Form 1503.1 06.78